(19) Europäisches Patentamt / European Patent Office / Office européen des brevets

(11) **EP 3 673 773 A1**

(12) **EUROPEAN PATENT APPLICATION**

(43) Date of publication:
**01.07.2020 Bulletin 2020/27**

(21) Application number: **19218524.7**

(22) Date of filing: **20.12.2019**

(51) Int Cl.:
*A47G 21/18* (2006.01)     *C03C 21/00* (2006.01)
*C03C 23/00* (2006.01)     *C03C 3/091* (2006.01)
*C03C 3/089* (2006.01)     *C03C 3/093* (2006.01)
*C03C 3/087* (2006.01)     *C03C 3/095* (2006.01)
*C03C 3/112* (2006.01)     *C03C 3/11* (2006.01)
*A61J 15/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2018 PCT/CN2018/123157**

(71) Applicant: **Schott Glass Technologies (Suzhou) Co. Ltd.**
**Suzhou, Jiangsu 215009 (CN)**

(72) Inventors:
• **Qian, Pengxiang**
 **Shanghai, 201201 (CN)**
• **Xue, Junming**
 **Shanghai, 201101 (CN)**
• **Wintersteller, Fritz**
 **83317 Teisendorf (DE)**
• **Steden, Folker**
 **95615 Marktredwitz-Brand (DE)**
• **Uchida, Takahisa**
 **Kanagawa, 252-0007 (JP)**
• **Debreczeny, Csaba**
 **92637 Weiden (DE)**

(74) Representative: **Fuchs Patentanwälte Partnerschaft mbB**
**Westhafenplatz 1**
**60327 Frankfurt am Main (DE)**

(54) **DRINKING IMPLEMENT WITH HIGH STRENGTH**

(57)     The present invention relates to drinking implements, a method for producing the drinking implements of the invention as well as to uses of the drinking implement.

Figure 1

**Description**

The present invention relates to drinking implements, a method for producing the drinking implements of the invention as well as to uses of the drinking implements. Some drinking implements of this invention may be referred to as drinking straws.

**Background of the invention**

Plastic articles harm the environment. The ban of single-use plastics is an increasing social issue. In one aspect, an increasing environmental problem is caused by plastic straws. These plastic straws are widely used, for example in restaurants, bars, cafés or at home. However, plastic straws are often found in ocean trash and can severely endanger the environment. Plastic straws have been found in the stomachs of dead seabirds and turtles. The degradation of plastic straws takes a very long time. Degradation products of plastic straws, sometimes referred to as microplastics, are taken up by microorganisms and animals and accumulate in the food chain and may cause harm to animals and humans.

Therefore, an alternative drinking implement for plastic straws is needed. The alternative should be environmentally friendly. Such a desired new type of drinking implement should be recyclable, and reusable many times in order to avoid environmentally harmful trash. Furthermore, new types of drinking implements should not end up in the stomachs of animals so as to avoid any harm to the animals and humans. Additionally, a desired drinking implement should not give rise to degradation products, which can accumulate in the food chain. The desired drinking implement should not cause harm to animals by means of internal and/or external violation.

Desirable drinking implements are environmentally friendly, resist breakage and remain dimensionally stable. Amongst others, intact and non-deformable drinking implements decrease the likelihood of being eaten by animals. At the same time, a desirable drinking implement should possess a low breakage risk, be of constant quality and have a good mouth-feel and attractive appearance.

Paper drinking implements such as paper straws could be alternatives for plastic drinking implements. Paper straws have a short degradation time. However, paper straws are not suitable for multi-use. Coatings can be used to make paper straws reusable, or to color or structure the paper straws. However, these coatings reduce the recyclability and environmental friendliness of the drinking implement. Further, paper drinking implements are difficult to clean.

Alternatively, straw drinking implements such as straws made of straw could be used instead of plastic straws. Straw drinking implements are biodegradable. However, straw drinking implements are not suitable for extensive multi-use. Furthermore, straw drinking implements are susceptible to deformation, and difficult to clean after use. Furthermore, other drinking implements such as wood straws or bamboo straws could be used instead of plastic straws. However, wood straws or bamboo straws by tendency have a high surface roughness and are difficult to clean. This may result in residual fluid, which can give rise to growth of microorganisms, which can harm the health of animals or humans.

Another alternative drinking implement would be metal drinking implements such as metal straws. By tendency, metal straws do not provide a good mouth-feel, attractive appearance and are difficult to provide at a constant quality. Metal straws lack transparency, so that the inside cleanliness of the metal straw cannot easily be evaluated from the outside.

Reusable drinking implements must be hygienic, i.e. they must be easy to clean for example in a usual dishwasher. They should also be chemically inert and keep this inertness even after many dishwasher cycles.

It is an object of the present invention to overcome the problems of the prior art. Particularly, it is an object of the present invention to provide a new type of drinking implement with low breakage risk and high durability.

**Description of the invention**

The object is solved by the subject-matter disclosed herein. Particularly, the object is solved by a drinking implement having a first opening, a lumen, a second opening and a wall extending from the first opening to the second opening and surrounding the lumen,

wherein a fluid can be drawn through one opening, into the lumen and out of the other opening by applying suction to the other opening,

wherein the wall has an inner surface facing toward the lumen, and an outer surface facing away from the lumen.

In an embodiment, the wall is made of glass, and/or the wall has a first compressive stress layer extending from the wall's inner surface to a first depth ($DCL_1$) within the wall, and/or the wall has a second compressive stress layer extending from the wall's outer surface to a second depth ($DCL_2$) within the wall. The wall may have a tensile stress layer disposed within the wall at a depth between first and second compressive stress layer, and/or the second depth is from 0.05% to 25% of the thickness of the wall.

In an embodiment and/or during use of the drinking implement, the first opening can be the lower opening, and the second opening can be the upper opening of the drinking implement. The lower opening may be the opening that extends into the fluid to be ingested through the drinking implement, whereas the upper opening may be the opening contacting the lips of the user during use of the drinking implement.

The drinking implement of this invention solves the problems of the prior art. The drinking implement is easy to clean and perfectly reusable without losing its attractive appearance, preferably even after having undergone a plurality of dishwasher cycles. It also has the benefit of being transparent so that its cleanliness can easily be evaluated from the outside. The drinking implement also has a very high recyclability without loss of quality or purity. The industry has years of experience in glass recycling. In certain embodiments, the glass used for the drinking implements of this invention is made of a glass that is easily recyclable, e.g. a glass that is free of toxic ingredients like Pb, As, and Cd. It has a neutral taste, high chemical stability and high chemical inertness. Because of the high chemical stability of the glass wall very few substances precipitate or leak out of the glass wall, for example when the drinking implement is in contact with fluids like for example juice, tea or dishwasher fluids. Notably, the drinking implement may withstand a whole range of aggressive chemical conditions, including liquids with very acidic conditions (e.g. lime juice), alkaline conditions (e.g. some detergents), organic solvents (e.g. ethanol in vodka), combinations thereof such as acidic and organic solvents (e.g. long island ice tea). The drinking implement should not lose its beneficial properties even under repeated influence of these harsh substances even at elevated temperatures. In preferred embodiments, the glass used for the drinking implement is able to withstand these harsh conditions. The drinking implement is suitable for cleaning with industrial washing machines without loss of quality or purity.

Glass straws have not been widely used because users were afraid that the straw could break for example due to the user biting on the upper edge, or the lower edge hitting the bottom of a drinking glass. Also, users have been afraid of glass straws breaking when falling to the ground, particularly when used in kitchens with hard floors such as ceramic tiles or marble. Parents have been particularly reluctant to let their children use glass straws for fear of broken glass walls and sharp shards.

The drinking implement as outlined herein solves all these issues and addresses the fears of the users, thereby helping the glass straws to penetrate the market and substitute plastic straws and less durable alternatives. The compressive stress of the drinking implement as outlined above increases the mechanical strength of the drinking implement to an extent that even a drop of the drinking implement on a marble floor from a considerable height does not result in the breakage of the glass wall. In the unlikely event that a drinking implement of this invention should nevertheless break, it will preferably break into a great number of small granules essentially without forming lance-shaped sharp shards.

In an embodiment, the drinking implement essentially consists of the wall, openings and lumen. In other embodiments, the drinking implement has further parts, such as a receptacle for holding flowers or cocktail umbrellas. In an embodiment, the drinking implement essentially consists of glass. The drinking implement may be of straight shape, or curved.

The inventors have conducted comprehensive experiments to find out how the drinking implement can be improved to achieve the objectives of this invention.

**Compressive stress layers**

Compressive Stress (CS) is an induced compression in a glass network after ion-exchange performed on the surface layer of glass. Commercially available test machines such as a surface stress meter (e.g. the FSM6000) can be used to measure the CS by a waveguide mechanism. In an embodiment, the compressive stress of the 1st, and/or 2nd compressive stress layer ($CS_1$ and/or $CS_2$, respectively) is higher than 100 MPa, higher than 200 MPa, higher than 300 MPa, or higher than 400 MPa. In certain embodiments, $CS_1$ and/or $CS_2$ may even be higher than 500 MPa, higher than 600 MPa, higher than 700 MPa, or even higher than 800 MPa. In some embodiments the compressive stress of $CS_1$ and/or $CS_2$ is higher than 900 MPa. However, CS should not be excessively high because the glass may otherwise be susceptible to self-breakage. Preferably, $CS_1$ and/or $CS_2$ is lower than 1500 MPa, or lower than 1250 MPa.

In the art, the depth of the compressive stress layer is often referred to as DoL. The depth of the first compressive stress layer on the wall's inner surface ($DCL_1$) and the depth of the second compressive stress layer on the wall's outer surface ($DCL_2$) is the thickness of an ion-exchanged layer where CS exists on the surface of glass. The depths may be measured with a surface stress meter, in particular with an FSM 6000 surface stress meter produced by Orihara. In an embodiment, DoL is measured using SEM/EDS (Scanning Electron Microscopy / Energy Dispersive X-ray Spectroscopy). In some embodiments, $DCL_1$ and $DCL_2$ are identical. According to the present description the term *"identical"* means that $DCL_1$ corresponds to $DCL_2 \pm 10\%$. Preferably, $DCL_2$ is at least as high as $DCL_1$. More preferably, the ratio of $DCL_2$ and $DCL_1$ is at least >1, at least 1.1, at least 1.3, at least 1.5, at least 2, or at least 4.

$DCL_1$ may be more than 1 $\mu$m, more than 5 $\mu$m, more than 10 $\mu$m, more than 20 $\mu$m, more than 40 $\mu$m, more than 50 $\mu$m, more than 70 $\mu$m, or even more than 100 $\mu$m. For a given glass composition $DCL_1$ increases with increased

toughening time. Sufficient $DCL_1$ contributes to ensure the mechanical strength of the drinking implement, but too high of a depth increases the risk of self-breakage. Therefore, $DCL_1$ preferably is less than 300 $\mu$m, less than 200 $\mu$m, less than 100 $\mu$m, less than 80 $\mu$m, less than 70 $\mu$m, or less than 60 $\mu$m. In some embodiments, $DCL_1$ is less than 50 $\mu$m.

The depth of the second compressive stress layer $DCL_2$ may be more than 1 $\mu$m, more than 5 $\mu$m, more than 10 $\mu$m, more than 20 $\mu$m, more than 40 $\mu$m, more than 50 $\mu$m, more than 70 $\mu$m, or even more than 100 $\mu$m. For a given glass composition $DCL_2$ increases with increased toughening time. Sufficient $DCL_2$ contributes to ensure the mechanical strength of the drinking implement, but too high of a depth increases the risk of self-breakage. Therefore, $DCL_2$ preferably is less than 300 $\mu$m, less than 200 $\mu$m, less than 100 $\mu$m, less than 80 $\mu$m, less than 70 $\mu$m, or less than 60 $\mu$m. In some embodiments, $DCL_2$ is less than 50 $\mu$m.

The sum of $DCL_1$ and $DCL_2$ is the total compressive depth (TCD). TCD preferably is more than 2 $\mu$m, more than 10 $\mu$m, more than 50 $\mu$m, more than 100 $\mu$m, or more than 200 $\mu$m. TCD preferably is less than 200 $\mu$m, and more preferably less than 100 $\mu$m.

The ratio of $DCL_1$ to a thickness of the wall may be more than 0.05%. In preferred embodiments, it may be more than 1 %, and more than 2%. In some embodiments, the ratio is more than 3%, more than 4 %, more than 5 %, and more than 10 %. Preferably, the ratio of $DCL_1$ to a thickness of the wall is less than 25 %, less than 20%, less than 15 %, less than 10 %, and less than 7 %.

Preferably, the ratio of $DCL_2$ to a thickness of the wall may be more than 0.05%, more than 1 %, more than 2%. In some embodiments, the ratio is more than 3%. Preferably, the ratio of $DCL_2$ to a thickness of the wall is less than 25 %, less than 20%, less than 15 %, less than 10 %, less than 7 %. For example, the depth of the second compressive stress layer ($DCL_2$) may be 30 $\mu$m and the wall thickness may be 1 mm. The ratio of $DCL_2$ to thickness of the wall would then be 3%.

In an alternative embodiment, $DCL_1$ and/or $DCL_2$ may be more than 0.2 mm, more than 0.4 mm, more than 0.6 mm, or more than 0.8 mm. $DCL_1$ and/or $DCL_2$ may be less than 5 mm, less than 4 mm, less than 3 mm, or less than 2 mm.

In an alternative embodiment, the ratio of $DCL_1$ and/or $DCL_2$ to a thickness of the wall may be more than 4%, more than 5%, more than 10%, or more than 12 %.

Preferably, the ratio of TCD to a thickness of the wall is more than 0.05%, more than 1 %, more than 2%. In some embodiments, the ratio is more than 3%. Preferably, the ratio of TCD to a thickness of the wall is less than 25 %, less than 20%, less than 15 %, less than 10 %, less than 7 %.

Central Tension (CT) results when compressive stress is induced on both sides of a glass. To balance the stress according to the 3$^{rd}$ principle of Newton's law, a tension stress must be induced in the center region of the glass, and it is called central tension. CT can be calculated from measured compressive stress and the depth of the compressive stress layer. It is surprisingly found that toughened drinking implements with a thinner wall can tolerate much higher CT than drinking implements with a thicker wall without self-breakage. Preferably, CT of the wall is at least 50 MPa, at least 100 MPa, at least 120 MPa, at least 150 MPa, at least 160 MPa, at least 170 MPa, at least 200 MPa, at least 300 MPa, at least 500 MPa. CT may be limited to 2000 MPa, to 1000 MPa or to 800 MPa.

In an embodiment, the ratio of central tension to a compressive stress of the 1$^{st}$, and/or 2$^{nd}$ compressive stress, layer is in the range of from 0.05 to 2.0., in the range of 0.1-1.8, in the range of 0.15-1.7, in the range of 0.2-1.6, or in the range of 0.3-1.5.

The compressive stress may be introduced by physical and/or chemical toughening. In an embodiment, the glass is chemically toughened with $NaNO_3$ only, $KNO_3$ only or with both $KNO_3$ and $NaNO_3$. Preferably, for drinking implements with a wall thickness of less than 3 mm chemical toughening is used.

**Geometric parameters**

The outer diameter perpendicular to the longitudinal axis of the wall of the drinking implement preferably is at most 25 mm, at most 20 mm, at most 15 mm, at most 9.5 mm, at most 8.5 mm, or at most 7.5 mm. In some embodiments, the outer diameter perpendicular to the longitudinal axis of the drinking implement is at most 7 mm. A smaller outer diameter reduces the amount of glass for the manufacture of the drinking implement and the amount of trash, when the drinking implement is disposed of. Therefore, drinking implements with a smaller outer diameter are more environmentally friendly. Furthermore, a smaller outer diameter reduces the weight of the drinking implement. A drinking implement with a lower weight is easier to use during drinking. It is one of the advantages of this invention that the drinking implement have excellent breakage and durability characteristics at relatively low weight/wall thickness.

The outer diameter perpendicular to the longitudinal axis of the wall of the drinking implement preferably is at least 2 mm, at least 3 mm, at least 4 mm, at least 6 mm. In some embodiments, the outer diameter perpendicular to the longitudinal axis of the drinking implement is at least 7 mm. A too small diameter impedes the suction of fluid through the lumen of the drinking implement. Additionally, a too small diameter makes it more difficult for the mouth to easily adapt and rightly enclose the drinking implement. Furthermore, a too small diameter renders the drinking implement more susceptible to breakage or at least leaves the impression that it might break easily. The term "outer diameter" may refer to the largest or the average diameter measured perpendicular to the longitudinal axis of the wall of the drinking implement between the outer surface on the one side of the wall, and the outer surface on the other side of the wall.

The wall of the drinking implement preferably has a maximum thickness of at most 5 mm, at most 4 mm, at most 3 mm, at most 2 mm, at most 1.6 mm, or at most 1.5 mm. In some embodiments, the wall of the drinking implement is less than 1.4 mm. In some embodiments, the wall is at most 6 mm. If the wall of the drinking implement is too thick the implement will be heavy and unpleasant to use. Also, a thick drinking implement gives an unpleasant mouth feel.

The wall of the drinking implement preferably has a thickness of at least 0.1 mm, at least 0.2 mm, at least 0.3 mm, or at least 0.5 mm. In some embodiments, the wall of the drinking implement is at least 0.6 mm, at least 0.8 mm, or at least 1.0 mm. In some embodiments, the wall is at least 3 mm. The term thickness may refer to the largest thickness or the average thickness of the wall, if the thickness is not the same in all areas.

Preferably, the length of the drinking implement is at least 10 mm, at least 50 mm, at least 100 mm, or at least 200 mm. Preferably, the length of the drinking implement is at most 800 mm, at most 500 mm, at most 400 mm, or at most 300 mm.

In an embodiment, the drinking implement has a length from 50 mm to 800 mm. The length may be at least 90 mm, at least 100 mm, at least 120 mm, or at least 180 mm. In embodiments, the length is limited to at most 600 mm, at most 400 mm, at most 300 mm or at most 250 mm. These lengths of the drinking implement have been proven useful for most desired applications.

The wall of the drinking implement preferably has less than two flaws with a diameter of more than 10 $\mu$m per $cm^2$ of glass. "Flaw" means a mark, bubble, airline, scratch, crack, tear, rupture, clouding, discoloration, stain, blemish, inclusions or other imperfections or defects in the glass. The flaw diameter is measured by light microscopy. It may refer to Martin's diameter. In an embodiment, the number of flaws is evaluated based on microscopic analysis of at least 10 $cm^2$ of glass.

The drinking implement has a cross section perpendicular to the longitudinal axis of the drinking implement. The cross-section may have a regular or an irregular shape. The cross section perpendicular to the longitudinal axis of the drinking implement may be substantially circular. A substantially circular cross section is more easily adapted and tightly enclosed by the mouth. Thereby a better mouth-feel is achieved. Further, substantially circular cross sections allow for easy cleaning and unimpeded fluid flow through the lumen.

The average surface roughness ($R_a$) is a measure of the texture of a surface. It is quantified by the vertical deviations of a real surface from its ideal form. Commonly, amplitude parameters characterize the surface based on the vertical deviations of the roughness profile from the mean line. $R_a$ is arithmetic average of the absolute values of these vertical deviations, e.g. as defined in DIN EN ISO 4287:2010-07. The roughness can be measured with atomic force microscopy. The inner surface and/or outer surface of the drinking implement preferably has an average surface roughness Ra of less than 30 nm, of less than 10 nm, of less than 5 nm, of less than 2 nm, or of less than 1 nm. In some embodiments, the surface roughness Ra is less than 0.5 nm. A smaller inner and/or outer surface roughness reduces the amount of residual fluid after use and cleaning of the drinking implement. Residual fluid within the drinking implement can give rise to growth of microorganisms which could harm the health of animals or humans. Furthermore, a smaller outer surface roughness gives a better mouth-feel and tongue-feel as well as gives a more pleasant feeling when holding the drinking element in the hand. The mentioned roughness values can be obtained by fire-polishing the glass.

The refractive index $n_d$ of the drinking implement preferably is from 1.450 to 1.800, from 1.490 to 1.600, from 1.500 to 1.580, or from 1.510 to 1.560. The refractive index contributes to the attractiveness of the appearance of the drinking implement.

**Mechanical resistance parameters**

The 4-point-bending (4PB) strength, i.e. the flexural strength, of the drinking implement preferably is at least 200 MPa, at least 500 MPa, at least 1.0 GPa, at least 1.5 GPa, at least 1.7 GPa, or at least 2.0 GPa. In some embodiments, the 4-point-bending strength is at least 2.5 GPa. In an embodiment, the 4PB strength is up to 10.0 GPa, up to 7.0 GPa or up to 5.0 GPa. The bending strength is the stress in a material just before it yields in a flexure test. The 4-point-bending (4PB) strength is the flexural strength under the setup of 4-point bending, e.g. with a span of the bottom supporters (support bearings) of 40 mm and a span of the load heads (inner bearings) of 20 mm. The test is known to those skilled in the art. For example, the procedure given in ASTM C1161-13 can be followed. Commercially available test machines such as a universal mechanical tester can be used to measure the 4PB strength. For this test, the sample is put on two bottom supporters and pressed by two upper load heads, until it breaks. The force is in linear relation with the distance of the upper pressure heads. By calculation of the force, the upper spans of two pressure heads, the bottom span of two supporters and sample dimension, 4PB strength can be obtained. In some embodiments, the drinking implements of the present invention have a 4PB strength at least twice as high as a non-toughened drinking implement of the same material and size, wherein a "non-toughened" drinking implement has not undergone chemical or physical toughening.

Preferably, the 4PB strength of the drinking implement is at least 3 times, or at least 4 times as high as a non-toughened drinking implement of the same material and size.

In an embodiment, the drinking implement has a ball or hammer impact resistance of considerable height, which means that the drinking implement resists the impact of a ball or hammer dropping onto the drinking implement from a considerable height without breakage ("impact height"). The ball or hammer has a mass of 58.3 g and is made of steel. The ball or hammer impact resistance of the drinking implement of this invention may be higher than 15 cm, higher than 20 cm, higher than 30 cm, higher than 40 cm, higher than 50 cm, higher than 60 cm, higher than 70 cm, higher than 80 cm, higher than 100 cm, or even higher than 150 cm. In some embodiments, the impact height exceeds 200 cm. In this context "resisting the impact" or "resistant to the impact" means that the drinking implement does not break upon the impact of the ball or the hammer, respectively. In embodiments, the drinking implement withstands an impact energy (weight*height*gravitational acceleration) in the ball or hammer impact test of at least 0.1 J, or at least 0.2 J, or at least 0.3 J, or at least 0.5 J. In an embodiment, the impact energy is up to 10 J, up to 5 J, up to 2 J or up to 1.5 J.

In an embodiment, the drinking implement has a low ball or hammer impact breakage probability, which means that the drinking implement is likely to resist the impact of a ball or hammer dropping onto the drinking implement from a predetermined height without breakage. The ball or hammer has a mass of 58.3 g and is made of steel. The ball or hammer impact breakage probability of the drinking implement of this invention may be measured at a predetermined height of higher than 15 cm, higher than or at 20 cm, higher than or at 30 cm, higher than or at 40 cm, higher than or at 50 cm, higher than or at 60 cm, higher than or at 70 cm, higher than or at 80 cm, higher than or at 100 cm, or even higher than or at 150 cm. In some embodiments, the height may exceed 200 cm. In this context "having an impact breakage probability" means, that of 100 drinking implements tested under the indicated conditions, only the indicated percentage breaks, i.e. at a breakage probability of less than 10% less than 10 out of 100 drinking implements break during the test. Preferably, the ball or hammer impact breakage probability of the drinking implement is less than 10%, less than 5%, less than 1%, less than 0.5%, or even less than 0.1%.

Commercially available test machines such as a hammer drop tester can be used to measure the impact resistance. The impact resistance is indicated as the maximum impact height that the drinking implement is able to resist without breakage. For testing, a sample is fixed on a hammer drop tester. A hammer with flat edge and appropriate weight is dropped down from an initial height. If the sample does not break, the hammer is set to a higher height in increments and dropped down again, until the sample is broken. The impact energy is recorded accordingly. The flat edge of the hammer makes sure that each impact will occur on the center/highest point of the sample. In some embodiments, the drinking implements of the present invention have a ball or hammer impact resistance at least 4 times as high as a non-toughened drinking implement of the same material and size. Preferably, the ball or hammer impact resistance of the drinking implement is at least 5 times, at least 6 times, or at least 8 times as high as a non-toughened drinking implement of the same material and size.

In an embodiment, the drinking implement has a marble drop resistance of considerable height, which means that the drinking implement resists dropping onto a marble surface from a considerable height without breakage ("marble dropping height"). During the marble drop resistance test, the drinking implement falls freely onto a marble surface at an angle of 45° relative to the marble surface. The marble drop resistance of the drinking implement of this invention may be higher than 30 cm, higher than 40 cm, higher than 50 cm, higher than 60 cm, higher than 70 cm, higher than 80 cm, higher than 100 cm, or even higher than 120 cm. In some embodiments, the marble dropping height is even higher than 150 cm. In an embodiment, the marble dropping height is up to 200 cm, or up to 160 cm. "Falling freely" means that the drinking implement is raised to a specific altitude and then released so that it falls to the marble surface at an essentially constant angle relative to the surface and essentially without rotation. The marble drop resistance is indicated as the maximum marble dropping height that the drinking implement is able to resist without breakage. Marble was used to determine the drop resistance because it is often used for floors. In some embodiments, the drinking implements of the present invention have a marble drop resistance at least 4 times as high as a non-toughened drinking implement of the same material and size. Preferably, the marble drop resistance of the drinking implement is at least 5 times, at least 6 times, or at least 8 times as high as a non-toughened drinking implement of the same material and size.

In an embodiment, the drinking implement has a low marble drop breakage probability, which means that the drinking implement is likely to resist dropping onto a marble surface from a predetermined height without breakage. During the marble drop breakage probability test, the drinking implement falls freely onto a marble surface at an angle of 45° relative to the marble surface. The marble drop breakage probability of the drinking implement of this invention may be indicated for a predetermined height of higher than or at 30 cm, higher than or at 40 cm, higher than or at 50 cm, higher than or at 60 cm, higher than or at 70 cm, higher than or at 80 cm, higher than or at 100 cm, or even higher than or at 120 cm. In some embodiments, the predetermined height is even higher than or at 150 cm. "Falling freely" means that the drinking implement is raised to a specific altitude and then released so that it falls to the marble surface at an essentially constant angle relative to the surface and essentially without rotation. The marble drop breakage probability is indicated as the percentage of drinking implements that break when dropping on marble from the predetermined height, when testing 100 drinking implements. In some embodiments, the drinking implements of the present invention have a marble drop breakage probability of less than 10%, less than 5%, less than 1%, less than 0.5%, or even less than 0.1%. In test methods of this invention, marble with Mohs hardness of from 3 to 5 may be used.

In an embodiment, the drinking implement has a wood drop resistance of considerable height, which means that the drinking implement resists dropping onto a wooden surface from a considerable height without breakage ("wood dropping height"). During the wood drop resistance test, the drinking implement falls freely onto a wooden surface at an angle of 45° relative to the wooden surface. The wood drop resistance of the drinking implement of this invention may be higher than 60 cm, higher than 70 cm, higher than 80 cm, higher than 100 cm, higher than 120 cm, or higher than 150 cm. In some embodiments, the wood dropping height is even higher than 200 cm, higher than 300 cm or even higher than 400 cm. The wood dropping height may be up to 700 cm or up to 500 cm. "Falling freely" means that the drinking implement is raised to a specific altitude and then released so that it falls to the wooden surface at an essentially constant angle relative to the surface and essentially without rotation. The wood drop resistance is indicated as the maximum wood dropping height that the drinking implement is able to resist without breakage. Wood was used to determine the drop resistance because it is often used for floors and furniture. The wooden surface may be a polished oak floor.

In an embodiment, the drinking implement has a low wood drop breakage probability, which means that the drinking implement is likely to resist dropping onto a wooden surface from a predetermined height without breakage. During the wood drop breakage probability test, the drinking implement falls freely onto a wooden surface at an angle of 45° relative to the wooden surface. The wood drop breakage probability of the drinking implement of this invention may be indicated for a predetermined height of higher than or at 30 cm, higher than or at 40 cm, higher than or at 50 cm, higher than or at 60 cm, higher than or at 70 cm, higher than or at 80 cm, higher than or at 100 cm, or even higher than or at 120 cm. In some embodiments, the predetermined height is even higher than 150 cm. "Falling freely" means that the drinking implement is raised to a specific altitude and then released so that it falls to the wooden surface at an essentially constant angle relative to the surface and essentially without rotation. The wood drop breakage probability is indicated as the percentage of drinking implements that break when dropping on wood from the predetermined height, when testing 100 drinking implements. In some embodiments, the drinking implements of the present invention have a wood drop breakage probability of less than 10%, less than 5%, less than 1%, less than 0.5%, or even less than 0.1%.

In an embodiment, the drinking implement has an epoxy drop resistance of considerable height, which means that the drinking implement resists dropping onto an epoxy surface from a considerable height without breakage ("epoxy dropping height"). During the epoxy drop resistance test, the drinking implement falls freely onto an epoxy surface at an angle of 45° relative to the epoxy surface. The epoxy drop resistance of the drinking implement of this invention may be higher than 60 cm, higher than 70 cm, higher than 80 cm, higher than 100 cm, higher than 120 cm, or higher than 150 cm. In some embodiments, the epoxy dropping height is even higher than 200 cm, higher than 300 cm or even higher than 400 cm. The epoxy dropping height may be up to 700 cm or up to 500 cm. "Falling freely" means that the drinking implement is raised to a specific altitude and then released so that it falls to the epoxy surface at an essentially constant angle relative to the surface and essentially without rotation. The epoxy drop resistance is indicated as the maximum epoxy dropping height that the drinking implement is able to resist without breakage. Epoxy was used to determine the drop resistance because it is often used for floors.

In an embodiment, the drinking implement has a low epoxy drop breakage probability, which means that the drinking implement is likely to resist dropping onto an epoxy surface from a predetermined height without breakage. During the epoxy drop breakage probability test, the drinking implement falls freely onto an epoxy surface at an angle of 45° relative to the epoxy surface. The epoxy drop breakage probability of the drinking implement of this invention may be indicated for a predetermined height of higher than or at 30 cm, higher than or at 40 cm, higher than or at 50 cm, higher than or at 60 cm, higher than or at 70 cm, higher than or at 80 cm, higher than or at 100 cm, or even higher than or at 120 cm. In some embodiments, the predetermined height is even higher than or at 150 cm. "Falling freely" means that the drinking implement is raised to a specific altitude and then released so that it falls to the epoxy surface at an essentially constant angle relative to the surface and essentially without rotation. The epoxy drop breakage probability is indicated as the percentage of drinking implements that break when dropping on epoxy from the predetermined height, when testing 100 drinking implements. In some embodiments, the drinking implements of the present invention have an epoxy drop breakage probability of less than 10%, less than 5%, less than 1%, less than 0.5%, or even less than 0.1%. In test methods of this invention, epoxy with Mohs hardness of from 2 to 3 may be used.

Young's modulus reflects the material expansion when certain force is applied to the material. The larger Young's modulus, the more difficult the geometry variation will be. Therefore, the glass and/or the drinking implement used for the drinking implement should have a reasonably high Young's modulus in order to resist geometry changes and to keep expansion after chemical toughening low. The Young's modulus of the glass and/or the drinking implement preferably is at least 60 GPa, at least 65 GPa, at least 70 GPa, at least 75 GPa, or at least 80 GPa. However, the Young's modulus should also not be extraordinarily high so that a certain degree of elasticity is maintained. A certain elasticity has a positive influence on the impact and drop resistance values of the drinking implement. Preferably, the glass and/or drinking implement has a Young's modulus of at most 120 GPa, at most 115 GPa, at most 110 GPa, at most 105 GPa, at most 100 GPa, or at most 90 GPa. The Young's modulus can be measured with standard methods known in the art.

Preferably, the Young's modulus is measured according to DIN 13316:1980-09.

The inverse stiffness is defined as density over Young's modulus. High inverse stiffness leads to high flexibility of a glass. On the other hand, low inverse stiffness is good for maintaining the stability of a glass, but increases the risk of breakage when a glass article is bent. The inverse stiffness of the wall of the drinking implement preferably is in the range of 0.032 to 0.0355 $(s/mm)^2$, in the range of 0.0325 to 0.0345 $(s/mm)^2$, or in the range of 0.033 to 0.034 $(s/mm)^2$. A higher inverse stiffness increases the resistance of the drinking implement to deformation by applied forces. Applied forces may occur by biting with the teeth, falling of the drinking implement to the bottom or edge of a drinking container or squeezing of the drinking implement during transportation. An increased inverse stiffness thereby increases the longevity, durability, and reusability of the drinking implement without loss in quality or purity.

The drinking implement exhibits good thermal shock resistance, i.e. the drinking implement resists a thermal shock without breakage. Thermal shock resistance may be determined by transferring the drinking implement

A. from room temperature (25°C) to boiling water ("heat shock test"),

B. from room temperature (25°C) to ice water ("cold shock test"),

C. from boiling water (100°C) to ice water ("intense cold shock test"), and/or

D. from ice water (0°C) to boiling water ("intense heat shock test").

During thermal shock resistance testing, the drinking implement is first immersed in the first medium, e.g. boiling water in the intense cold shock test, and kept in the first medium for a time sufficient for the drinking implement to adjust its temperature to the temperature of the first medium. A time of 3 minutes will usually be sufficient. After that the drinking implement is taken from the first medium and immersed in the second medium, e.g. ice water in the intense cold shock test. Immersing the drinking implement into the second medium includes introducing the drinking implement into the second medium with the wall's longitudinal axis perpendicular to the medium's surface, and with the first opening first, i.e. as it would be done when using the drinking implement. Additionally or alternatively, the test may include introducing the drinking implement with the second opening first. The step of immersing the drinking implement into the media may be done with constant speed, preferably with a speed of about 1 cm/s, or about 2 cm/s, until the implement is completely immersed in the respective medium. The implement is then kept in the medium for at least 3 minutes. In embodiments, the drinking implement of this invention does not break when undergoing the heat shock test and/or cold shock test. Preferably, the drinking implement does not break when undergoing the intense heat shock test and/or intense cold shock test.

The drinking implement's thermal shock resistance may be expressed as temperature shock resistance value which is defined as the temperature change that the implement is able to resist without breakage. The test method is the same as given above for the intense cold shock test C, but with variable temperature of the media. The temperature shock resistance value of the drinking implements of this invention may be as high as at least 121 °C, at least 130 °C or even at least 150°C. A high thermal shock resistance is useful for the drinking implement's ability to withstand autoclaving.

Good resistance to thermal shock may be influenced by annealing the glass. Whether or not a glass has been annealed can be measured because the fictive temperature of a glass depends on its thermal history. An annealed glass has a lower fictive temperature compared to non-annealed glass. The material's strength may also affect the thermal shock resistance because the breakage due to thermal stress only happens when the induced thermal stress exceeded the material strength. Annealing may be done by heating the glass of the drinking implement to about 20-30°C above the transition temperature $T_g$ of the glass, and holding the temperature for at least 120 minutes and cooling down to room temperature. In some embodiments, the temperature may be held for about 180 minutes.

Thermal shock resistance is relevant for the glass used in the drinking implements of this invention particularly for chemically toughened glass. Chemical toughening includes fast heating and quenching so that thermal shock is inevitable during this process. Salt baths used for chemical toughening are usually heated to higher than 350 °C, or even up to 700 °C for melting the salt. When immersing the glass into the salt bath, the glass heats up extremely fast. On the other hand, when taking the glass out of the salt bath, it is quenched very fast. These thermal shock processes may result in low yield when toughening articles with low thermal shock resistance.

The thermal shock parameter R of the wall of the drinking implement preferably is higher than 190 $W/m^2$. A high thermal shock parameter R prevents the appearance of cracks, tears, ruptures, splits or even breaking of the drinking implement when the temperature of the environment of the drinking implement changes. Such a change in environmental temperature for example occurs, when the drinking implement is placed in hot fluids such as hot tea or hot dish-washer water. A change in environmental temperature for example occurs, when the drinking element is placed in cold fluids such as iced cocktails or iced coffee. A change in environmental temperature can also occur when the air temperature changes greatly, for example when the drinking implement is placed into a fridge or into a microwave.

The robustness of a material to thermal shock is characterized with the thermal shock parameter R:

$$R = \frac{\sigma(1 - \mu)\lambda}{E\alpha}$$

Where R is the thermal shock parameter; $\alpha$ is the coefficient of linear thermal expansion (CTE); $\sigma$ is the brittle strength intensity factor; E is the Young's modulus; $\lambda$ is the thermal conductivity; and $\mu$ is Poisson ratio. Higher values for R represent greater resistance to thermal shock and high tolerance to temperature gradients and thermal load. Accordingly, thermal stress resistance for glass is determined by maximum thermal loading $\Delta T$ from the following equation:

$$\Delta T = \frac{2\sigma(1 - \mu)}{E\alpha}$$

With no doubt glass with higher R certainly has higher thermal loading tolerance and hence has greater resistance to thermal shock. Therefore, before chemical toughening the glass for the wall of the drinking implement R is preferably higher than 100 W/m$^2$, more preferably higher than 120 W/m$^2$, even more preferably higher than 150 W/m$^2$. Before chemical toughening $\Delta T$ is preferably higher than 200°C, more preferably higher than 250°C, more preferably higher than 300°C. $\Delta T$ may be up to 500°C or up to 400°C. Preferably, R of the toughened glass of the wall of the drinking implement is higher than 190 W/m$^2$, higher than 250 W/m$^2$, higher than 300 W/m$^2$, higher than 500 W/m$^2$, or even higher than 800 W/m$^2$. In embodiments, R may be up to 1000 W/m$^2$.

The maximum thermal load $\Delta T$ of the wall of the drinking implement preferably is higher than 380°C. $\Delta T$ is calculated from intrinsic parameters like R to evaluate the temperature gradient resistance of glass material without temperature difference experiments, and the accordance with experimental data is generally good. The resistance to temperature differences is also influenced by the specific conditions such as the size of glass sample, thickness of glass, and processing history of glass. In embodiments of this invention toughened glass is used for the drinking implement, which has a maximum thermal load $\Delta T$ of higher than 380°C, higher than 500°C, higher than 600°C, higher than 1,000°C, or even higher than 1,500°C. Maximum thermal load $\Delta T$ may be up to 2,000 °C.

**Further glass properties**

The coefficient of linear thermal expansion (CTE) is a measure of characterizing the expansion behavior of a glass when it experiences certain temperature variation. CTE may be the average linear thermal expansion coefficient in a temperature range of from 20°C to 300°C as defined in DIN ISO 7991:1987. The lower the CTE, the less expansion with temperature variation. Therefore, in the temperature range of from 20°C to 300°C the glass of the wall of the drinking implement of the present invention preferably has a CTE of less than 12 ppm/K, more preferably less than 10.0 ppm/K, more preferably less than 9.0 ppm/K, more preferably less than 8.0 ppm/K, more preferably less than 7 ppm/K, more preferably less than 6.5 ppm/K. However, the CTE should also not be very low. Preferably, in the temperature range of from 20°C to 300°C the CTE of the glasses of the present invention is more than 3 ppm/K, more preferably more than 4 ppm/K, more preferably more than 5 ppm/K, more preferably more than 6 ppm/K. In order for the glasses to be well suitable for chemical toughening, the glasses may contain relatively high amounts of alkali metal ions, preferably sodium ions. However, thereby the average linear thermal expansion coefficient CTE in the temperature range between 20°C and 300°C is increased. Preferably, the glass of the wall of the drinking implement of the invention has a CTE higher than 7*10$^{-6}$/°C, more preferably higher than 8*10$^{-6}$/°C, more preferably higher than 9*10$^{-6}$/°C. However, a high CTE also complicates production of the glasses by direct hot-forming. Therefore, the glasses preferably have a CTE lower than 13*10$^{-6}$/°C.

The threshold diffusivity D of the wall of the drinking implement preferably is at least 1.5 $\mu$m$^2$/hour, more preferably at least 4 $\mu$m$^2$/hour. The chemical toughening performance of glass can be described by the threshold diffusivity D. The threshold diffusivity D can be calculated from the measured depth of layer (DoL) and the ion exchange time (IET) according to the relationship: DoL = -1.4 sqrt (4*D*IET). The threshold diffusivity may for example be measured when chemically toughening the glass at 410°C in KNO$_3$ for 8 hours. The glass used for the drinking implement may have excellent chemical toughening performance which allows for a very economic production. Thus, the glass may have a threshold diffusivity D of at least 1.5 $\mu$m$^2$/hour. Preferably, the glass of the present invention has a threshold diffusivity D of at least 4 $\mu$m$^2$/hour, at least 6 $\mu$m$^2$/hour, at least 8 $\mu$m$^2$/hour, at least 10 $\mu$m$^2$/hour, at least 12 $\mu$m$^2$/hour, at least 14 $\mu$m$^2$/hour, at least 16 $\mu$m$^2$/hour, at least 18 $\mu$m$^2$/hour, at least 20 $\mu$m$^2$/hour, at least 25 $\mu$m$^2$/hour, at least 30 $\mu$m$^2$/hour, at least 35 $\mu$m$^2$/hour, or even at least 40 $\mu$m$^2$/hour. In an embodiment, the threshold diffusivity is up to 60

$\mu m^2$/hour or up to 50 $\mu m^2$/hour.

The transition temperature of the glass used for the wall of the drinking implement may be higher than 300 °C, higher than 500 °C, higher than 520 °C, higher than 520 °C, higher than 550 °C, or even higher than 600 °C. The transition temperature of the wall of the drinking implement may be lower than 900 °C, lower than 800 °C, lower than 700 °C, lower than 650 °C, or lower than 630 °C. Generally, a low transition temperature usually includes lower energy costs for melting the glass and for processing. Also, the glass will usually have a lower fictive temperature if the transition temperature is low. Hence, the glass will be less prone to irreversible thermal shrinkage during chemical toughening, if the transition temperature is higher.

The working point $T_4$ of the glass used for the wall of the drinking implement may be lower than 1,350°C, or lower than 1,300 °C, or even lower than 1,150 °C. The working point $T_4$ is the temperature at which the glass may be fully re-shaped. It is defined as the temperature at which the viscosity of the glass is $10^4$ dPas. The viscosity can be measured using a rotational viscosimeter, e.g. as described in DIN ISO 7884-2:1998-2. The dependence of viscosity on temperature is determined according to the VFT equation (Vogel-Fulcher-Tammann). As described above, the glasses of the invention are very well chemically toughenable, which is correlated with high $T_4$ and high CTE.

The drinking implement should be manufactured with a high purity and it should feature a good resistance, especially against alkaline solutions. The resistance against alkaline solutions is important for the use of drinking implements. Alkaline solutions are often used as cleaning agents for drinking implements. Preferably, the drinking implement has an alkaline resistance according to DIN ISO 695:1994 of class A3, of A2, or even of A1. Alkaline resistance means resistance to attack by aqueous alkaline solutions at 50 °C. High chemical stability and/or a high alkaline resistance will lead to strongly reduced precipitation or leakage of substances out of the drinking implement for example when the drinking implement is in contact with fluids such as juice, tea or dishwasher water. Leakage of substances out of the drinking implement will change the chemical composition of the surface of the glass from which substances have leaked. This might lead negative effects on the appearance and should therefore be avoided.

As mentioned above, safety considerations play an important role for the users of drinking implements. Prior art glass straws form rather long and sharp pieces when broken. The drinking implement of this invention forms a plurality of pieces when breaking, in particular when dropping on a marble surface from a height above the marble dropping height as described above. Preferably, 93% of the pieces have a length of less than 1 cm, less than 0.7 cm, less than 0.6 cm, less than 0.5 cm, or less than 0.4 cm. Smaller pieces cause less harm than larger pieces. In embodiments, the wall of a drinking implement forms at least 20 pieces, e.g. when breaking in a marble drop test as described herein. Preferably, the wall breaks into at least 50 pieces, at least 100 pieces or even at least 250 pieces under the mentioned conditions. The pieces are preferably small and stumpy. The pieces are preferably free of long or sharp pieces. Long or sharp pieces and splinters increase the risk of injury. Preferably, the aspect ratio of said pieces, e.g. of at least 93% of the pieces, is smaller than 1:10, more preferably smaller than 1:7, more preferably smaller than 1:5, more preferably smaller than 1:2, more preferably smaller than 1:1.5. "Aspect ratio" is understood according to the present invention as the ratio between the length and the width of the pieces that the wall of the drinking implement has broken into. The diameters may be determined in a set of at least 20 pieces, or preferably all of the pieces, and calculating the arithmetic average of the lengths and the widths of the pieces. The length of a piece is equivalent to the length of its longitudinal axis and the width is the largest extension of the piece in a direction perpendicular to the piece's longitudinal axis.

**Glass compositions**

The glass used for the wall of the drinking implement is not limited to a specific glass composition. The glass may be selected from the group consisting of soda-lime glass, borosilicate glass, alkaline-resistant glass and aluminosilicate glass. Optionally, a borosilicate glass is used.

The glass of the drinking implement preferably comprises the following components in the indicated amounts (in wt.%):

| Component | Content (wt.%) |
|---|---|
| $SiO_2$ | 40 to 85 |
| $Al_2O_3$ | 0 to 25 |
| $Na_2O$ | 0 to 18 |
| $K_2O$ | 0 to 15 |
| $MgO$ | 0 to 10 |
| $B_2O_3$ | 0 to 22 |

(continued)

| Component | Content (wt.%) |
|---|---|
| $Li_2O$ | 0 to 10 |
| ZnO | 0 to 5 |
| CaO | 0 to 16 |
| BaO | 0 to 12 |
| $ZrO_2$ | 0 to 5 |
| $CeO_2$ | 0 to 0.5 |
| $SnO_2$ | 0 to 3 |
| $P_2O_5$ | 0 to 15 |
| $Fe_2O_3$ | 0 to 1.5 |
| $TiO_2$ | 0 to 10 |
| SrO | 0 to 1 |
| F | 0 to 1 |
| Cl | 0 to 1 |

$SiO_2$ is a relevant network former that can be used in the glass used for this of the invention. Therefore, the glasses may comprise $SiO_2$ in an amount of at least 60 wt.%. More preferably, the glass comprises $SiO_2$ in an amount of at least 62 wt.%, at least 65 wt.%, at least 68 wt.%, more than 70 wt.%, or even more than 75 wt.%. However, the content of $SiO_2$ in the glass should also not be extremely high because otherwise the meltability may be compromised. The amount of $SiO_2$ in the glass may be limited to at most 85 wt.%, or at most 82 wt.%. In embodiments, the content of $SiO_2$ in the glass is from 60 to 85 wt.%, or from >65 to 75 wt.%.

$B_2O_3$ may be used in order to enhance the network by increasing the bridge-oxide in the glass via the form of $[BO_4]$ tetrahedra. It also helps to improve the damage resistance of the glass. However, $B_2O_3$ should not be used in high amounts in the glass since it can decrease the ion-exchange performance. Furthermore, addition of $B_2O_3$ can significantly reduce the Young's modulus. The glass may comprise $B_2O_3$ in an amount of from 0 to 20 wt.%, preferably from 0 to 15 wt.%, preferably from 0.1 to 13 wt.%. In embodiments, the glass preferably comprises at least 5 wt.%, more preferably at least 7 wt.%, or at least 10 wt.% of $B_2O_3$.

$P_2O_5$ may be used in the glass of the invention in order to help lowering the melting viscosity by forming $[PO_4]$ tetrahedra, which can significantly lower the melting point without sacrificing anti-crystallization features. Limited amounts of $P_2O_5$ do not increase geometry variation very much, but can significantly improve the glass melting, forming performance, and ion-exchanging (chemical toughening) performance. However, if high amounts of $P_2O_5$ are used, geometry expansion upon chemical toughening may be increased significantly. Therefore, the glasses may comprise $P_2O_5$ in an amount of from 0 to 4 wt.%, or from 0 to 2 wt.%. In some embodiments, the glass is free of $P_2O_5$.

It is believed that $Al_2O_3$ can easily form tetrahedra coordination when the alkaline oxide ratio content is equal or higher than that of $Al_2O_3$. $[AlO_4]$ tetrahedra coordination can help building up more compact network together with $[SiO_4]$ tetrahedra, which can result in a low geometry variation of the glass. $[AlO_4]$ tetrahedra can also dramatically enhance the ion-exchange process during chemical toughening. Therefore, $Al_2O_3$ is preferably contained in the glasses in an amount of at least 0 wt.%, more preferably of more than 1 wt.%, more preferably of more than 4 wt.%. However, the amount of $Al_2O_3$ should also not be very high because otherwise the viscosity may be very high so that the meltability may be impaired. Therefore, the content of $Al_2O_3$ in the glasses is preferably at most 20 wt.%, at most 12 wt.%, or at most 10 wt.%. In preferred embodiments, the content of $Al_2O_3$ in the glasses is from 0 to 20 wt.%, from 1 to 12 wt.%, or from 4 to 10 wt.%.

$TiO_2$ can also form $[TiO_4]$ and can thus help building up the network of the glass, and may also be beneficial for improving the acid resistance of the glass. However, the amount of $TiO_2$ in the glass should not be very high. $TiO_2$ present in high concentrations may function as a nucleating agent and may thus result in crystallization during manufacturing. Preferably, the content of $TiO_2$ in the glasses is from 0 to 10 wt.%, or up to 7 wt.%. In some embodiments, the glass comprises at least 0.5 wt.%, at least 2 wt.%, or at least 3 wt.% of $TiO_2$. In an embodiment, the glass is free of $TiO_2$.

$ZrO_2$ has the functions of lowering the CTE and improving the alkaline resistance of a glass. It may increase the melting viscosity, which can be suppressed by using $P_2O_5$. Like alkaline metals, $Zr^{4+}$ is also a network modifier. Furthermore, $ZrO_2$ is a significant contributor for increased Young's modulus. Preferably, the content of $ZrO_2$ in the

glasses is from 0 to 5 wt.%, up to 2 wt.%. The glass may be free of $ZrO_2$. In some embodiments, the glass comprises at least 0.1 wt.%, or at least 0.2 wt.% $ZrO_2$.

Alkaline oxides $R_2O$ ($Li_2O$ + $Na_2O$ + $K_2O$ + $Cs_2O$) may be used as network modifiers to supply sufficient oxygen anions to form the glass network. Preferably, the content of $R_2O$ in the glasses is more than 4 wt.%, or more than 12 wt.%. However, the content of $R_2O$ in the glass should not be very high because otherwise chemical stability and chemical toughenability may be impaired. Preferably, the glasses comprise $R_2O$ in an amount of at most 30 wt.%, at most 25 wt.%, or at most 20 wt.%. Other embodiments are free of alkaline oxides, or at least free of $Na_2O$, $K_2O$, $Cs_2O$ and/or $Li_2O$

$Li_2O$ can help improving the Young's modulus and lowering CTE of the glass. $Li_2O$ also influences the ion-exchange greatly. It was surprisingly found that Li-containing glass has a smaller geometry variation. Therefore, the content of $Li_2O$ in the glasses may be set to at least 0 wt.%, or more than 5 wt.%, or even more than 10 wt.%. However, the content of $Li_2O$ should not be very high because otherwise chemical stability and chemical toughenability may be impaired. Preferably, the content of $Li_2O$ in the glasses is at most 24 wt.%, less than 15 wt.%, or even 0 wt.%.

$Na_2O$ may be used as a network modifier. However, the content of $Na_2O$ should not be very high because otherwise chemical stability and chemical toughenability may be impaired. Preferably, the content of $Na_2O$ in the glasses is from 0 to 15 wt.%, preferably from 2 to 15 wt.%. In preferred embodiments, the content of $Na_2O$ in the glasses is at least 5 wt.%, at least 8 wt.%, or at least 10 wt.%.

$K_2O$ may be used as a network modifier. However, the content of $K_2O$ should not be very high because otherwise chemical stability and chemical toughenability may be impaired. Preferably, the content of $K_2O$ in the glasses is from 0 to 15 wt.%, or from >0.5 to 7 wt.%. The glass may be free of $K_2O$.

Preferably, the glasses comprise more $Na_2O$ than $K_2O$. Thus, preferably the molar ratio $Na_2O/(Na_2O+K_2O)$ is from >0.5 to 1.0, from >0.6 to 1.0, from >0.7 to 1.0, or from >0.8 to 1.0.

Preferably, the content of the sum of $Li_2O$ and $Na_2O$ in the glasses is more than 10 mol-%, or more than 15 mol-%. However, the content of the sum of $Li_2O$ and $Na_2O$ in the glasses should not be very high. Preferably, the content of the sum of $Li_2O$ and $Na_2O$ in the glasses is at most 25 mol-%, or at most 20 mol-%.

The glasses may also comprise alkaline earth metal oxides as well as ZnO which are collectively termed "RO" in the present specification. Alkaline earth metals and Zn may serve as network modifiers. Preferably, the glasses comprise RO in an amount of from 0 to 20 wt.%, preferably from 0 to 15 wt.%. In some embodiments, the glass preferably comprises at least 0.5 wt.%, more preferably at least 1 wt.%, more preferably at least 5 wt.% of RO. Preferred alkaline earth metal oxides are selected from the group consisting of MgO, CaO, SrO and BaO. More preferably, alkaline earth metals are selected from the group consisting of MgO und CaO. More preferably, the alkaline earth metal is MgO. Preferably, the glass comprises MgO in an amount of from 0 to 10 wt.%. In some embodiments, the glass comprises at least 0.5 wt.%, at least 1 wt.%, or at least 2 wt.% of MgO. Preferably, the glass comprises CaO in an amount of from 0 to 16 wt.%, preferably from 0 to 13 wt.%, preferably from 0 to 10 wt.%. In some embodiments, the glass comprises at least 0.5 wt.%, at least 1 wt.%, at least 5 wt.%, at least 10 wt.%, or at least 12 wt.% of CaO. Preferably, the glass comprises BaO in an amount of from 0 to 12 wt.%, preferably from 0 to 10 wt.%. In some embodiments, the glass comprises at least 0.5 wt.%, at least 2 wt.%, or at least 7 wt.% of BaO. The glass may be free of BaO, MgO and/or CaO.

Preferably, the glass comprises ZnO in an amount of from 0 to 5 wt.%. In some embodiments, the glass comprises at least 0.5 wt.%, at least 1 wt.%, or at least 2 wt.% of ZnO. In other embodiments, the glass is free of ZnO. Preferably, the content of the sum of MgO and ZnO in the glasses is from 0 to 10 wt.%. In some embodiments, the content of the sum of MgO and ZnO in the glasses at least 0.5 wt.%, more preferably at least 1 wt.%, more preferably at least 2 wt.%.

At the end, when forming a glass by mixing different types of the oxides, the integrated effect should be considered to achieve a glass with comparatively low expansion, which is supported by high densification of the glass network. It means, in addition to $[SiO_4]$ tetrahedral $[BO_4]$ tetrahedra, $[AlO_4]$ tetrahedra, or $[PO_4]$ tetrahedra are expected to help connect the $[SiO_4]$ more effectively rather than other type of polyhedrons. In other words, $[BO_3]$ triangle and $[AlO_6]$ octahedron, for instance, are not preferred. It means, sufficient oxygen anions are preferable to be offered by adding proper amounts of metal oxides, such as $R_2O$ and RO.

Preferably, the content of $SnO_2$ in the glasses is from 0 to 3 wt.%. More preferably, the glasses are free of $SnO_2$. Preferably, the content of $Sb_2O_3$ in the glasses is from 0 to 3 wt.%. More preferably, the glasses are free of $Sb_2O_3$. Preferably, the content of $CeO_2$ in the glasses is from 0 to 3 wt.%. High contents of $CeO_2$ are disadvantages because $CeO_2$ has a coloring effect. Therefore, more preferably, the glasses are free of $CeO_2$. Preferably, the content of $Fe_2O_3$ in the glasses is from 0 to 3 wt.%. More preferably, the glasses are free of $Fe_2O_3$.

The glass described herein is described as having a composition of different constituents. This means that the glass contains these constituents without excluding further constituents that are not mentioned. However, in preferred embodiments, the glass consists of the components mentioned in the present specification to an extent of at least 95%, more preferably at least 97%, most preferably at least 99%. In most preferred embodiments, the glass essentially consists of the components mentioned in the present specification.

Optionally, coloring oxides can be added, such as $Nd_2O_3$, $Fe_2O_3$, CoO, NiO, $V_2O_5$, $MnO_2$, CuO, $CeO_2$, $Cr_2O_3$.

0-2 wt.% of $As_2O_3$, $Sb_2O_3$, $SnO_2$, $SO_3$, Cl and/or F could be also added as refining agents. 0-5 wt.% of rare earth oxides could also be added to add optical or other functions to the glass wall.

The terms *"X-free"* and *"free of component X"*, or "0 % of X", respectively, as used herein, refer to a glass, which essentially does not comprise said component X, i.e. such component may be present in the glass at most as an impurity or contamination, however, is not added to the glass composition as an individual component. This means that the component X is not added in essential amounts. Non-essential amounts according to the present invention are amounts of less than 100 ppm, preferably less than 50 ppm and more preferably less than 10 ppm. Preferably, the glasses described herein do essentially not contain any components that are not mentioned in this description.

In embodiments, the glass used for the drinking implement has the following composition in percent by weight:

| Component | Content (wt.%) |
| --- | --- |
| $SiO_2$ | 40 to 85 |
| $Al_2O_3$ | 0 to 25 |
| $Na_2O$ | 2 to 18 |
| $K_2O$ | 0 to 15 |
| MgO | 0 to 10 |
| $B_2O_3$ | 0 to 15 |
| $Li_2O$ | 0 to 10 |
| ZnO | 0 to 5 |
| CaO | 0 to 10 |
| BaO | 0 to 5 |
| $ZrO_2$ | 0 to 5 |
| $CeO_2$ | 0 to 0.5 |
| $SnO_2$ | 0 to 3 |
| $P_2O_5$ | 0 to 15 |
| $Fe_2O_3$ | 0 to 1.5 |
| $TiO_2$ | 0 to 10 |
| SrO | 0 to 1 |
| F | 0 to 1 |
| Cl | 0 to 1 |

In embodiments, the glass used for the drinking implement has the following composition in percent by weight:

| Component | Content (wt.%) |
| --- | --- |
| $SiO_2$ | 55 to 65 |
| $Al_2O_3$ | 10 to 20 |
| $Na_2O$ | 0 to 3 |
| $K_2O$ | 0 to 3 |
| MgO | 0 to 5 |
| $B_2O_3$ | 0 to 6 |
| $Li_2O$ | 0 to 3 |
| ZnO | 0 to 3 |
| CaO | 7 to 15 |
| BaO | 5 to 10 |

(continued)

| Component | Content (wt.%) |
|---|---|
| $ZrO_2$ | 0 to 3 |
| $CeO_2$ | 0 to 0.5 |
| $SnO_2$ | 0 to 3 |
| $P_2O_5$ | 0 to 3 |
| $Fe_2O_3$ | 0 to 1.5 |
| $TiO_2$ | 0 to 3 |
| SrO | 0 to 1 |
| F | 0 to 1 |
| Cl | 0 to 1 |

In embodiments, the glass used for the drinking implement has the following composition in percent by weight:

| Component | Content (wt.%) |
|---|---|
| $SiO_2$ | 65 to 85 |
| $Al_2O_3$ | 0 to 7 |
| $Na_2O$ | 0.5 to 10 |
| $K_2O$ | 0 to 10 |
| MgO | 0 to 3 |
| $B_2O_3$ | 8 to 20 |
| $Li_2O$ | 0 to 3 |
| ZnO | 0 to 3 |
| CaO | 0 to 3 |
| BaO | 0 to 3 |
| $ZrO_2$ | 0 to 3 |
| $CeO_2$ | 0 to 0.5 |
| $SnO_2$ | 0 to 3 |
| $P_2O_5$ | 0 to 3 |
| $Fe_2O_3$ | 0 to 1.5 |
| $TiO_2$ | 0 to 3 |
| SrO | 0 to 1 |
| F | 0 to 1 |
| Cl | 0 to 1 |

In embodiments, the glass used for the drinking implement has the following composition in percent by weight:

| Component | Content (wt.%) |
|---|---|
| $SiO_2$ | 60 to 80 |
| $Al_2O_3$ | 0 to 5 |
| $Na_2O$ | 10 to 18 |

(continued)

| Component | Content (wt.%) |
| --- | --- |
| $K_2O$ | 0 to 5 |
| MgO | 0 to 5 |
| $B_2O_3$ | 0 to 5 |
| $Li_2O$ | 0 to 3 |
| ZnO | 0 to 3 |
| CaO | 2 to 10 |
| BaO | 0 to 5 |
| $ZrO_2$ | 0 to 3 |
| $CeO_2$ | 0 to 0.5 |
| $SnO_2$ | 0 to 3 |
| $P_2O_5$ | 0 to 3 |
| $Fe_2O_3$ | 0 to 1.5 |
| $TiO_2$ | 0 to 3 |
| SrO | 0 to 1 |
| F | 0 to 1 |
| Cl | 0 to 1 |

**Method of making drinking implement**

The present invention also includes a method for producing a drinking implement of the present invention as described below.

The invention includes a method for producing a drinking implement according to this invention, the method comprising the steps of

a) Providing a composition of raw materials for the desired glass of the wall,

b) Melting the composition to form a glass melt,

c) Producing a glass tube from the glass melt,

d) Forming a wall of the drinking implement from the glass tube.

wherein the method comprises the additional step of toughening the glass by physical and/or chemical toughening. Producing the glass tube may include drawing a glass tube from the melt, e.g. using the Danner, Vello or down draw (A-Zug) process. The method may include coating at least one surface of the drinking implement and/or glass tube with at least one coating layer.

During the step of forming a wall of the drinking implement, the glass tube may be cut into pieces of a desired length necessary to obtain the drinking implement of this invention, such as ranging from 50 to 800 mm. After cutting, the one or both end sides, i.e. the first and second openings, of the glass tube may be fire-polished. After polishing, the glass tubes may be annealed.

For chemical toughening, the glass may be immersed in a salt bath. The salt bath may contain sodium and/or potassium salts. The salt for the salt bath may comprise Na, K or Cs nitrate, sulfate or chloride salts or a mixture of one or more thereof. Preferred salts are $NaNO_3$, $KNO_3$, NaCl, KCl, $K_2SO_4$, $Na_2SO_4$, $Na_2CO_3$, $K_2CO_3$, or combinations thereof. Additives like NaOH, KOH and other sodium or potassium salts may also be used for better controlling the speed of ion-exchange, CS and DoL during chemical toughening. In an embodiment, the salt bath comprises $KNO_3$, $NaNO_3$, $CsNO_3$ or mixtures thereof.

The temperature during chemical toughening may range from 320°C to 700°C, from 350°C to 500°C, or from 380°C to 450°C. If the toughening temperature is very low, the toughening rate will be low. Therefore, chemical toughening is preferably done at a temperature of more than 320°C, more preferably more than 350°C, more preferably more than 380°C, more preferably at a temperature of at least 400°C. However, the toughening temperature should not be very high because very high temperatures may result in strong compressive stress relaxation and low compressive stress. Preferably, chemical toughening is done at a temperature of less than 500°C, more preferably less than 450°C.

The time for chemical toughening may range from 5 min to 48 h, from 10 min to 20 h, from 30 min to 16 h, or from 60 min to 10 h. In preferred embodiments, the duration of chemical toughening is of from 0.5 to 16 h. Chemical toughening may either done in a single step or in multiple steps, in particular in two steps. If the duration of toughening is very low, the resulting DoL may be very low. If the duration of toughening is very high, the CS may be relaxed very strongly. The duration of each toughening step in a multistep toughening procedure is preferably between 0.05 and 15 hours, more preferably between 0.2 and 10 hours, more preferably between 0.5 and 6 hours, more preferably between 1 and 4 hours. The total duration of chemical toughening, in particular the sum of the durations of the two or more separate toughening steps, is preferably between 0.01 and 20 hours, more preferably between 0.2 and 20 hours, more preferably between 0.5 and 15 hours, more preferably between 1 and 10 hours, more preferably between 1.5 and 8.5 hours.

In some embodiments, the glass is chemically toughened with a mixture of $KNO_3$ and $NaNO_3$. In embodiments, the mixture comprises less than 50 mol% $NaNO_3$, less than 30 mol% $NaNO_3$, less than 20 mol% $NaNO_3$, less than 10 mol% $NaNO_3$, or less than 5 mol% $NaNO_3$. In some embodiments, the glass is chemically toughened with a mixture of $KNO_3$ and $CsNO_3$. In embodiments, the mixture comprises less than 50 mol% $CsNO_3$, less than 30 mol% $CsNO_3$, less than 20 mol% $CsNO_3$, less than 10 mol% $CsNO_3$, or less than 5 mol% $CsNO_3$. The balance may be $KNO_3$.

Chemical toughening with both $KNO_3$ and $NaNO_3$ may be done by using a mixture of $KNO_3$ and $NaNO_3$ or by performing separate toughening steps with essentially pure $NaNO_3$ and essentially pure $KNO_3$. Also in embodiments in which the glass is chemically toughened with mixtures of $KNO_3$ and $NaNO_3$, preferably two distinct consecutive toughening steps are performed. Preferably, the proportion of $KNO_3$ in the mixture used for the second toughening step is higher than the proportion of $KNO_3$ in the mixture used for the first toughening step. The chemical toughening can include multi steps in salt baths with alkaline metal ions of various concentrations to reach better toughening performance.

The toughening can be done by immersing the glass into a molten salt bath of the salts described above, or by covering the glass with a paste containing the ions described above, e.g. potassium ions and/or other alkaline metal ions, and heating to a high temperature for a certain time. The alkaline metal ions with larger ion radius in the salt bath or the paste exchange with alkaline metal ions with smaller radius in the glass article, and surface compressive stress is formed due to ion exchange.

A chemically toughened drinking implement of the invention may be obtained by chemically toughening at least the wall of the drinking implement of the present invention. The toughening process can be done by partially or completely immersing the drinking implement, the glass tube, the glass wall, or any intermediate glass article into an above-described salt bath, or subjecting it to a salt paste. The monovalent ions in the salt bath have radii larger than alkali ions inside the glass. A compressive stress to the glass is built up after ion-exchange due to larger ions squeezing in the glass network. After the ion-exchange, the strength and flexibility of the glass is surprisingly and significantly improved. In addition, the compressive stress induced by chemical toughening may increase scratch resistance of the drinking implement. Improved scratch resistance is particularly relevant for drinking implements because scratches affect both mechanical and chemical resistance of a glass surface as well as optical appearance.

After chemical toughening, the glass tubes are taken out of the salt bath, then cleaned with water and dried. Compressive stress layers are formed on the outer surface and/or inner surface of strengthened glass tubes. Correspondingly, a tensile stress is formed in the core part of the glass tubing wall.

Additionally, or as an alternative to chemical toughening the glass can be subjected to physical toughening. In some embodiments glass tubes are physically toughened. The glass tubes may be cut into short length, i.e., 100 to 400 mm. Then the two end sides of short glass tubes may be fire polished. When its wall thickness is bigger than 3 mm, short glass tubes may be physically toughened. Glass tubes may be placed into a furnace and heated above transformation temperature and kept for several minutes and then their surfaces are fast cooled with sprayed cooling air, causing compressive stress layers on both outer and inner surfaces.

## Use of the drinking implement and kit

This invention also includes the use of the drinking implement for ingesting fluids, including beverages, and/or for pharmaceutical applications. This invention also includes a method of using the drinking implement, including the step of ingesting an amount of fluid by applying suction to the second opening of the drinking implement, thereby drawing the fluid through the first opening, into the lumen and out the second opening. The fluid can be a hot or cold beverage. In an embodiment, said fluid is selected from the group consisting of water, tea, coffee, soft drinks, long drinks, cocktails, alcoholic or non-alcoholic beverages, soup, smoothies, shakes and any other drink. In an embodiment, the drinking implement is used for administration of pharmaceutical compositions.

This invention also includes a kit of parts, the kit of parts comprising at least one, preferably more than one, drinking implement of this invention and at least one cleaning brush. The cleaning brush may comprise bristles of hog hair, plastic, nylon or other material familiar to those skilled in the art. The cleaning brush may be sized to fit in the lumen of the one or more drinking implements to scrub the lumen of the drinking implement(s). The kit may include instructions on how to use and/or clean the drinking implement.

## Examples

Example drinking implements with glass walls according to this invention were prepared, and some properties were measured. The glass compositions tested can be seen in Table 1 below (in % by weight). All the examples shown in Table 1were strengthened glass drinking implements.

**Table 1**

|  | S1 | S2 | S3 | S4 | S5 | S6 | S7 | S8 | S9 | S10 | S11 | S12 | S13 | S14 | S15 |
|---|---|---|---|---|---|---|---|---|---|---|---|---|---|---|---|
| $SiO_2$ | 69 | 71 | 73.5 | 71 | 61.8 | 55.7 | 60.9 | 47.4 | 61.3 | 76 | 70 | 80.7 | 80.6 | 73.5 | 70 |
| $Al_2O_3$ | 4 | - | 1.2 | 2 | 7.9 | 23.8 | 16.8 | 22.9 | 20 | 5 | 6 | 2.5 | 2.3 | 7 | 6.5 |
| $Na_2O$ | 13 | 3.7 | 11.7 | 14 | 9.5 | 10.6 | 12.3 | 15.3 | 13.0 | 7 | 6.7 | 3.5 | 4.1 | 7 | 6 |
| $K_2O$ | 3 | 12.5 | 0.1 | 0.4 | 0.74 | 0.05 | 4.09 | - | - | - | 1 | 0.6 | - | 0.8 | 1 |
| MgO | 3 | - | 4.3 | 4.4 |  | - | 4.0 | 1.5 | 1.2 | - | - | - | - | - | 0.5 |
| $B_2O_3$ | 1 | - | - | - | 0.56 | 0.54 | - | - | 4.5 | 10.5 | 7.5 | 12.7 | 13 | 11 | 10 |
| $Li_2O$ | - | - | - | - | 4.9 | 2.9 | - | 0.01 | - | - | - | - | - | - | - |
| ZnO |  | 3 | - | - | 0.08 | 1.5 | - | - | - | - | - | - | - | - | - |
| CaO | 5 | 7.6 | 7.52 | 8.2 | 0.7 | 0.06 | -- | - | 0.02 | 1.5 | 0.8 | - | - | 0.7 | 0.5 |
| BaO | 2 | 2.2 | - | - | - | - | - | - | - | - | 2 | - | - | - | 1.5 |
| $ZrO_2$ | - | - | - | - | 3.55 | 0.03 | 1.52 | - | 0.01 | - | - | - | - | - | - |
| $CeO_2$ | - | - | - | - | 0.09 | - | 0.26 | - | - | - | - | - | - | - | - |
| $SnO_2$ | - | - | 1.68 | - | - | 0.03 | 0.35 | - | - | - | - | - | - | - | - |
| $P_2O_5$ | - | - | - | - | 0.05 | 4.7 | - | 12.9 | - | - | - | - | - | - | - |
| $Fe_2O_3$ | - | - | - | - | 0.09 | 0.06 | - | - | - | - | 1 | - | - | - | - |
| $TiO_2$ | - | - | - | - |  | 0.02 | - | - | - | - | 5 | - | - | - | - |
| SrO | - | - | - | - | 0.09 |  | - | - | - | - | - | - | - | - | - |
| F | - | - | - | - | - | - | 0.16 | - | - | - | - | - | - | - | - |
| Cl | - | - | - | - | - | 0.01 | - | - | - | - | - | - | - | - | - |

Table 2 shows the results of certain tests performed on the example drinking implements. The respective experiments were conducted as described herein. In the absence of any indication to the contrary, the experiments were performed under standard conditions as defined in DIN 1343.

C1 indicates a comparative example without the compressive stress layers described for the drinking implement of this invention.

The example glass was obtained in tube form with outer diameters of 6 mm, wall thickness of 1.1 mm and lengths of 1,500 mm. The glass tubes were cut into short tubes with lengths of about 200 mm. A fire polishing process was applied to the two end sides of the short tubes. Then a chemical toughening process was applied on the tubes. The tubes were immersed into an essentially pure $KNO_3$ molten salt bath at a temperature of 410 °C and kept for 8 h. After chemical toughening, the strengthened glass tubes are cleaned with water and dried.

**Table 2**

| | C1 | S1 | S2 | S3 | S4 | S5 | S6 | S7 | S8 | S9 | S10 | S11 | S12 | S13 |
|---|---|---|---|---|---|---|---|---|---|---|---|---|---|---|
| Tg [°C] | 533 | 525 | 542 | 550 | 555 | 505 | 605 | 615 | 625 | 600 | 565 | 550 | 525 | 520 |
| CTE [$10^{-6}*$K] | 9.4 | 9.1 | 9.4 | 8.35 | 8.4 | 8.5 | 7.9 | 8.85 | 8.7 | 7.6 | 4.9 | 5.4 | 3.25 | 3.25 |
| Young's Modulus [kN/mm$^2$] | 71.5 | 73 | 71.1 | 71 | 70 | 83 | 76.7 | 74 | 68.5 | 66 | 73 | 71 | 64 | 61 |
| Alkaline resistance according to DIN ISO 695 | A2 | A2 | A2 | A2 | A2 | A1 | A1 | A1 | A2 | A1 | A2 | A2 | A1 | A1 |
| Toughening [°C] | - | 410 | 410 | 410 | 410 | 410 | 410 | 410 | 410 | 410 | 410 | 410 | 410 | 410 |
| Toughening [h] | - | 8 | 8 | 8 | 8 | 8 | 8 | 8 | 8 | 8 | 8 | 8 | 8 | 8 |
| CS [MPa] | - | 300-800 | 300-800 | 300-800 | 300-800 | 700-1100 | 700-1100 | 700-1100 | 700-1100 | 700-1100 | 300-500 | 300-500 | 300-500 | 300-500 |
| Dol [μm] | - | 0-50 | 0-50 | 0-50 | 0-50 | 50-150 | 50-150 | 50-150 | 50-150 | 50-150 | 0-20 | 0-20 | 0-20 | 0-20 |
| 4PB strength [GPa] | 0.3-0.6 | 1-2.5 | 1-2.5 | 1-2.5 | 1-2.5 | 1.5-4 | 1.5-4 | 1.5-4 | 1.5-4 | 1.5-4 | 0.8-1.5 | 0.8-1.5 | 0.8-1.5 | 0.8-1.5 |
| Impact energy [J] | 0.05-0.1 | 0.2-0.7 | 0.2-0.7 | 0.2-0.7 | 0.2-0.7 | 0.5-1.2 | 0.5-1.2 | 0.5-1.2 | 0.5-1.2 | 0.5-1.2 | 0.1-0.5 | 0.1-0.5 | 0.1-0.5 | 0.1-0.5 |
| Free drop height to marble ground [cm] | <30 to 50 | <30 to 80 | <30 to 80 | <30 to 80 | <30 to 80 | <50 to 130 | <50 to 130 | <50 to 130 | <50 to 130 | <50 to 130 | <30 to 60 | <30 to 60 | <30 to 60 | <30 to 60 |
| Thermal resistance [°C] | 0 to 100 | 0 to 100 | 0 to 100 | 0 to 100 | 0 to 100 | 0 to 100 | 0 to 100 | 0 to 100 | 0 to 100 | 0 to 100 | 0 to 100 | 0 to 100 | 0 to 100 | 0 to 100 |

EP 3 673 773 A1

The compositions above are the final compositions measured in the glass. The skilled person knows how to obtain these glasses by melting the necessary raw materials.

## Example E1 - chemical toughening

The example glass S1 was obtained in tube form with outer diameters of 6 mm, wall thickness of 1.1 mm and lengths of 1,500 mm. The glass tubes were cut into short tubes with lengths of about 200 mm. A fire polishing process was applied to the two end sides of short tubes. Then a chemical toughening process was applied on the tubes. The tubes were immersed into an essentially pure $KNO_3$ molten salt bath at a temperature of 410 °C and kept for 8 h. After chemical toughening, the strengthened glass tubes are cleaned with water and dried.

The depth of compressive stress layer is 23 $\mu$m was measured by Scanning Electron Microscopy with Energy Dispersive Spectroscopy SEM/EDS. Then mechanical properties were evaluated. The 4-point bending strength of said strengthened drinking implement was 1.93 GPa. For the hammer impact resistance test, a tiny hammer with weight of 58.3 g was applied and the impact height without breakage of strengthened drinking implement was 74 cm. The impact energy is 0.42 J. A marble drop resistance test is done by dropping the strengthened drinking implement freely onto a marble ground. Apart from the ground material, the dropping height without breakage is also decided by the angle between drinking implement and ground when dropping. Three different angles were used, horizontal, 45° and 90°. On this case, the dropping height was more than 30 cm. For thermal resistance test, strengthened drinking implement is first transferred from room temperature to boiled water and kept for 3 min; then was transferred from boiled water to ice water and kept for another 3 min. No breakage occurred during the whole thermal resistance test.

## Example E2 - chemical toughening

The example glass S3 was obtained in tube form with outer diameters of 9 mm, wall thickness of 1 mm and lengths of 1,500 mm. The glass tubes were cut into short tubes with lengths of about 300 mm. A fire polishing process was applied to the two end sides of short tubes. Then a chemical toughening process was applied on the tubes. The tubes were immersed into a mixture of 90% $KNO_3$ and 10% $NaNO_3$ molten salt bath wt% at a temperature of 430 °C and kept for 16 h. After chemical toughening, the strengthened glass tubes are cleaned with water and dried.

The depth of compressive stress layer was 33 $\mu$m, measured by SEM/EDS. Then mechanical properties were evaluated. The 4 point bending strength is 1.37 GPa. For the hammer impact resistance test, a tiny hammer with weight of 58.3 g was applied and the impact height without breakage of strengthened drinking implement is 53 cm. Impact energy is 0.3 J accordingly. An epoxy drop resistance test is done by dropping the strengthened drinking implement freely onto an epoxy ground. Apart from the ground material, the dropping height without breakage is also decided by the angle between drinking implement and ground when dropping. Here 45° was tested. In this case, the dropping height was more than 200 cm. For thermal resistance test, strengthened drinking implement was first transferred from room temperature to boiled water and kept for 3 min; then it was transferred from boiled water to ice water and kept for another 3 min. No breakage occurred during the whole thermal resistance test.

## Example E3 - chemical toughening

The example glass S7, an aluminosilicate, was obtained in tube form with outer diameters of 5 mm, wall thickness of 0.7 mm and lengths of 1,500 mm. The glass tubes were cut into short tubes with lengths of about 200 mm. A fire polishing process was applied to the two end sides of short tubes. Then a chemical toughening process was applied on the tubes. The tubes were immersed into a mixture of essentially pure $KNO_3$ molten salt bath at a temperature of 390 °C and kept for 4 h. After chemical toughening, the strengthened glass tubes are cleaned with water and dried.

The depth of compressive stress layer is 20 $\mu$m, measured by SEM/EDS. Then mechanical properties are evaluated. The 4-point bending strength is 2.5 GPa. For hammer impact resistance test, a tiny hammer with weight of 58.3 g is applied and the impact height without breakage of strengthened drinking implement is 90 cm. Impact energy is 0.51 J. A marble drop test was done by dropping the strengthened drinking implement freely onto a marble ground. Apart from the ground material, the dropping height without breakage is also decided by the angle between drinking implement and ground when dropping. Here an angle of 45° was used. In this case, the dropping height was more than 50 cm. For thermal resistance test, strengthened drinking implement was first transferred from room temperature to boiled water and kept for 3 min; then was transferred from boiled water to ice water and kept for another 3 min. No breakage occurred during the whole thermal resistance test.

## Example E4 - chemical toughening

The example glass S2 was obtained in tube form with outer diameters of 6 mm, wall thickness of 1.1 mm and lengths of 1,500 mm. The glass tubes were cut into short tubes with lengths of about 200 mm. A fire polishing process was applied to the two end sides of short tubes. Then a chemical toughening process was applied on the tubes. The tubes were immersed into a mixture of essentially pure $KNO_3$ molten salt bath at a temperature of 410 °C and kept for 16 h. After chemical toughening, the strengthened glass tubes are cleaned with water and dried.

The depth of compressive stress layer is 30 $\mu$m. Compared with a drinking implement without chemical toughening, 4-point bending strength of strengthened drinking implement was improved 3 times to 1.7 GPa; impact height without breakage for hammer impact resistance test was improved 5 times to 76 cm; the dropping height without breakage in the marble drop test was improved from less than 30 cm to higher than 50 cm, corresponding to a 45 degree dropping angle between drinking implement and a marble ground.

Table 3 summarizes the results for the chemically toughened examples E1 to E4.

**Table 3**

| Example No. | E1 | E2 | E3 | E4 |
|---|---|---|---|---|
| **Outer diameter [mm]** | 6 | 9 | 5 | 6 |
| **wall thickness [mm]** | 1.1 | 1 | 0.7 | 1.1 |
| **Length of cut raw tubes [mm]** | 200 | 300 | 200 | 200 |
| **DCL2 [$\mu$m]** | 23 | 33 | 20 | 30 |
| **4PBS [GPa]** | 1.93 | 1.37 | 2.5 | 1.7 |
| **Impact height [cm]** | 74 | 53 | 90 | 76 |
| **Dropping height [cm]** | ≥30 | ≥200 | ≥50 | 50 |
| **Thermal resistance test** | passed | passed | passed | passed |

## Example E5 - physical toughening

SCHOTT DURAN® tubes with outer diameter 15 mm, wall thickness 4 mm and length 1,500 mm was used. Glass tubes were cut into short tubes with length of 200 mm. A fire polishing process is applied on the two end sides of short tubes, i.e. glass tube without strengthening. Then a physical toughening process was applied on the glass tubes. Glas tubes were placed into a furnace and heated up to 650 °C at a rate of 20 °C/min and kept for 5 min. Then the glass tubes were moved out of the furnace and cooled down to room temperature by spraying cooling air at rate of 50 °C/min.

After physical toughening, mechanical properties of strengthened drinking implements were evaluated. The 4-point bending strength was 5 GPa. For hammer impact resistance test, a tiny hammer with weight of 58.3 g was applied and the impact height without breakage of strengthened glass tube was 100 cm. Marble drop resistance test was done by dropping the strengthened drinking implement freely onto a marble ground. Apart from the ground material, the dropping height without breakage is also decided by the angle between glass tube and ground when dropping. Horizontal, 45° and 90° angles were tested. In this case, the dropping height was more than 90 cm. For thermal resistance test, strengthened drinking implement was first transferred from room temperature to boiled water and kept for 3 min; then it was transferred from boiled water to ice water and kept for another 3 min. No breakage occurred during the whole thermal resistance test.

## Example E6 - physical toughening

DURAN® glass tubes showed greatly improved mechanical performance before and after physical toughening. DURAN® glass tubes had an outer diameter of 20 mm, a wall thickness of 5 mm and a length 200 mm. A physical toughening process was applied on DURAN® glass tubes, with temperature 650 °C for 5 min and then cooled fast. Compared with raw DURAN® glass tubes, 4-point bending strength of strengthened DURAN®glass tubes was improved 3 times to 5 GPa; the impact height without breakage for the hammer impact resistance test was improved 3 times to 100 cm; dropping height without breakage for marble drop resistance test was improved from less than 50 cm to higher than 100 cm, corresponding to a 45 degree dropping angle between glass tube and a marble ground.

**Table 4**

| Example No. | S18 | S19 |
|---|---|---|
| **Outer diameter [mm]** | 15 | 20 |

(continued)

| Example No. | S18 | S19 |
|---|---|---|
| wall thickness [mm] | 4 | 5 |
| Length of cut raw tubes [mm] | 200 | 200 |
| 4-PB strength [GPa] | 5 | 5 |
| Impact height [cm] | 100 | 100 |
| Dropping height [cm] | 90 | 100 |
| Thermal resistance test | passed | passed |

### Examples E7 to E11

All glass articles were chemically toughened. The glass was soda lime glass with outer diameter of 6 mm, wall thickness of 1.1 mm and length of 200 mm, strengthened with essentially pure $KNO_3$.

**Table 5**

| Example No. | raw | E7 | E8 | E9 | E10 | E11 |
|---|---|---|---|---|---|---|
| Temperature °C | - | 390 | 410 | 410 | 430 | 430 |
| Time [h] | - | 16 | 8 | 16 | 8 | 16 |
| $DCL_1$ [μm] | - | 27 | 27 | 40 | 34 | 40 |
| $DCL_2$ [μm] | - | 27 | 27 | 45 | 35 | 45 |
| Breaking force kN | 0.35 | 1.26 | 1.47 | 1.29 | 1.22 | 1.29 |
| 4PBS [GPa] | 0.455 | 1.66 | 1.933 | 1.698 | 1.599 | 1.692 |
| Impact height [cm] | 11 | 54 | 74 | 76 | 59 | 49 |
| Dropping height (angle of 45°) [cm] | <30 to 50 | <30 to 70 | <30 to 80 | <30 to 70 | <30 to 50 | <30 to 50 |
| Dropping height (horizontally) [cm] | <30 to 50 | <30 to 50 | <30 to 50 | <30 to 50 | <30 to 60 | <30 to 60 |
| Dropping height (vertically) [cm] | <30 to 40 | <30 to 50 | <30 to 50 | <30 to 60 | <30 to 60 | <30 to 80 |

Compared with raw materials, toughened glass tubes showed better 4PB performance. The breaking force and 4PB strength have been strongly improved. Raw tubes were broken into a few long pieces with clear breaking points. Chemically toughened tubes were broken into tiny pieces due to the release of surface compressive stress during breakage. Compared with raw tubes, toughened tubes showed much stronger resistance to marble drop. The marble drop resistance without breakage has been strongly improved.

### Examples E12 to E17

Further examples were conducted on the following samples.

**Table 6**

| Example No. | E12 | E13 | E14 | E15 | E16 | E17 |
|---|---|---|---|---|---|---|
| Outer diameter [mm] | 9 | 9 | 9 | 9 | 6 | 6 |
| Wall thickness [mm] | 1.50 | 1.50 | 1.50 | 1.50 | 1.10 | 1.10 |
| Length of cut raw tubes [mm] | 200 | 200 | 200 | 200 | 200 | 200 |
| Annealing | yes | no | yes | no | no | no |
| Chemical toughening | no | no | 410°C/8h | 410°C/8h | no | 410°C/8h |
| Average breaking force [kN] | 1.35 | 1.62 | >4.00 | >4.00 | 0.35 | 1.47 |

(continued)

| Example No. | E12 | E13 | E14 | E15 | E16 | E17 |
|---|---|---|---|---|---|---|
| Impact Energy [J] | 0.17 | 0.28 | 1.37 | 1.54 | 0.06 | 0.42 |
| Thermal shock resistance | passed | passed | passed | passed | n.d. | n.d. |
| Biting performance [N] | 1678 | 2559 | >4000 | >4000 | n.d. | n.d. |

The biting performance test is performed with the same test machine as the 4-point bending test, but with the load heads aligned with the bottom supporters each at a span width of 40 mm. The force is increased until the drinking implement is broken and the force at breakage is recorded. 30 samples were tested for each type of drinking implement, the given value is the average.

**Barkeeper drop test**

The barkeeper drop test was performed on samples E12 to E15. The following table shows how many of 15 drinking implements of each sample did not break at a given height.

**Table 7**

| Height | E12 | E13 | E14 | E15 |
|---|---|---|---|---|
| 100 mm | 0 | 1 | 11 | 5 |
| 150 mm | 0 | 0 | 3 | 2 |
| 200 mm | 0 | 0 | 1 | 1 |

The barkeeper drop test simulates a typical load situation during use of a drinking implement. A glass is placed on a wooden table. The drinking implement is dropped into the glass at an angle of 5° relative to the vertical. The drinking implement is dropped 100 times from a given height and then the height is increased by 50 mm, and the drinking implement dropped for another 100 times. Reading example: of the 15 drinking implements according to sample E14 11 did not break when dropping into the glass 100 times from a height of 100 mm.

As can be appreciated, chemical toughening has a very beneficial effect on the barkeeper drop test performance of the drinking implements. Annealing has a very positive effect on the performance as well. Brief description of the figures

Figure 1 shows a drinking implement.

Figure 2 shows a cross section trough the wall of the drinking implement.

**Detailed description of the figures**

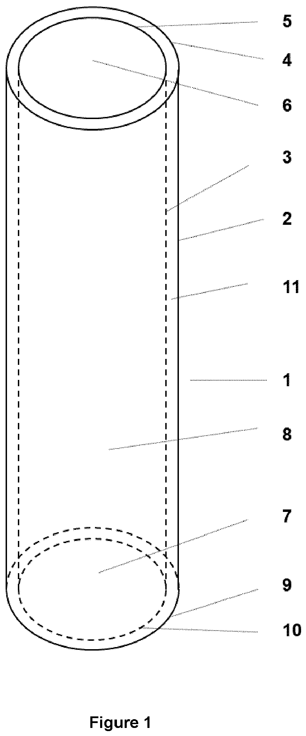

**Figure 1** shows a drinking implement 1 of this invention. The drinking implement 1 has an outer surface 2 and an inner surface 3, the inner surface 3 facing towards the lumen 8. The lumen 8 is surrounded by wall 11. Wall 11 connects second opening 6 and first opening 7. Each opening 6, 7 has inner edges 5, 10 and outer edges 4, 9.

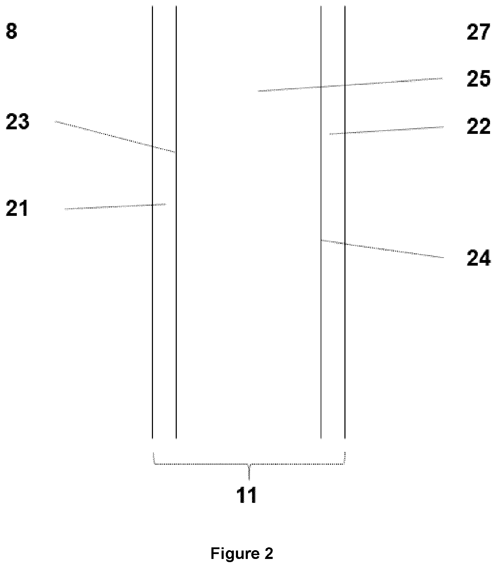

**Figure 2** shows cross section trough wall 11 of drinking implement of this invention. The wall has a central stress layer 25, and first and second compressive stress layers 21, 22. The first compressive stress layer 21 is disposed adjacent lumen 8 and ends at a first depth 23. The second compressive stress layer 22 is disposed adjacent the external environment 27 and ends at a second depth 24.

**List of reference numerals**

1   Drinking implement
2   Outer surface
3   Inner surface
4   Outer edge of second opening
5   Inner edge of second opening

6    Second opening
7    First opening
8    Lumen
9    Outer edge of first opening
10   Inner edge of first opening
11   Wall
21   First compressive stress layer (CS1)
22   Second compressive stress layer (CS2)
23   First depth (DCL1)
24   Second depth (DCL2)
25   Central stress layer
27   External environment

**Claims**

1.  Drinking implement having a first opening, a lumen, a second opening and a wall extending from the first opening to the second opening and surrounding the lumen,
    wherein a fluid can be drawn through the first opening, into the lumen and out of the second opening by applying suction to the second opening,
    wherein the wall has an inner surface facing toward the lumen, and an outer surface facing away from the lumen, further wherein

    - the wall is made of glass,
    - the wall has a first compressive stress layer extending from the wall's inner surface to a first depth within the wall,
    - the wall has a second compressive stress layer extending from the wall's outer surface to a second depth within the wall,
    - the wall has a tensile stress layer disposed within the wall at a depth between first and second compressive stress layer,
    - wherein the second depth is from 0.05% to 25% of the thickness of the wall.

2.  Drinking implement according to claim 1, wherein said glass is chemically or physically toughened.

3.  Drinking implement according to claim 1 or 2, wherein the ratio of the first and/or second depth to the thickness of the wall is at least 1%.

4.  Drinking implement according to at least one of the preceding claims, wherein the first and/or second depth is up to 100 $\mu$m.

5.  Drinking implement according to at least one of the preceding claims, wherein the wall has a thickness of from 0.8 mm to 1.6 mm.

6.  Drinking implement according to at least one of the preceding claims, wherein the inner surface and/or outer surface has a surface roughness $R_a$ of less than 30 nm.

7.  Drinking implement according to at least one of the preceding claims, wherein the wall has an inverse stiffness in the range of 0.032 to 0.0355 (s/mm)$^2$.

8.  Drinking implement according to at least one of the preceding claims, wherein said glass has a threshold diffusivity D of at least 1.5 $\mu$m$^2$/hour.

9.  Drinking implement according to at least one of the preceding claims, having a 4-point-bending strength of at least 500 MPa.

10. Drinking implement according to at least one of the preceding claims, wherein said drinking implement has an outer diameter perpendicular to its longitudinal axis of from 4 mm to 15 mm.

11. Drinking implement according to at least one of the preceding claims, resisting an impact energy in the ball and/or hammer impact resistance test of at least 0.28 J.

12. Drinking implement according to at least one of the preceding claims, having a dropping height in the marble drop resistance test of at least 30 cm.

13. Drinking implement according to at least one of the preceding claims, wherein said glass comprises the following components in the indicated amounts (in wt.%):

| Component | Content (wt.%) |
| --- | --- |
| $SiO_2$ | 40 to 85 |
| $Al_2O_3$ | 0 to 25 |
| $Na_2O$ | 0 to 18 |
| $K_2O$ | 0 to 15 |
| MgO | 0 to 10 |
| $B_2O_3$ | 0 to 20 |
| $Li_2O$ | 0 to 10 |
| ZnO | 0 to 5 |
| CaO | 0 to 16 |
| BaO | 0 to 12 |
| $ZrO_2$ | 0 to 5 |
| $CeO_2$ | 0 to 0.5 |
| $SnO_2$ | 0 to 3 |
| $P_2O_5$ | 0 to 15 |
| $Fe_2O_3$ | 0 to 1.5 |
| TiO2 | 0 to 10 |
| SrO | 0 to 1 |
| F | 0 to 1 |
| Cl | 0 to 1 |

14. Method for producing a drinking implement according to at least one of the preceding claims, the method comprising the steps of

   a) Providing a composition of raw materials for the desired glass of the wall,
   b) Melting the composition to form a glass melt,
   c) Producing a glass tube from the glass melt,
   d) Forming a wall of the drinking implement from the glass tube,

   wherein the method comprises the additional step of toughening the glass by physical and/or chemical toughening.

15. Use of the drinking implement according to at least one of claims 1 to 14 for ingesting fluids, including beverages, and/or for pharmaceutical applications.

16. Use of the drinking implement according to at least one of the preceding claims, wherein the drinking implement is used for administration of pharmaceutical compositions.

17. Kit of parts comprising at least one, preferably more than one, drinking implement according to one of claims 1 to 14 and at least one cleaning brush, and optionally including instructions on how to use and/or clean the drinking implement.

Figure 1

8

27

25

23

22

21

24

11

Figure 2

Europäisches
Patentamt

European
Patent Office

Office européen
des brevets

# EUROPEAN SEARCH REPORT

Application Number

EP 19 21 8524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2018 102778 U1 (KREUZER MARKUS [DE]) 9 July 2018 (2018-07-09) * the whole document * ----- | 1-17 | INV. A47G21/18 C03C21/00 C03C23/00 C03C3/091 |
| X | Anonymous: "What is Pyrex? - Eco Straw", , 14 July 2015 (2015-07-14), XP055692968, Retrieved from the Internet: URL:https://ecostraw.com/what-is-pyrex/ [retrieved on 2020-05-08] * the whole document * ----- | 1-17 | C03C3/089 C03C3/093 C03C3/087 C03C3/095 C03C3/112 C03C3/11 A61J15/00 |
| X | Anonymous: "EcoStraw Travel Kit - Eco Straw", , 1 January 2018 (2018-01-01), XP055692973, Retrieved from the Internet: URL:https://ecostraw.com/shop/skinny-straws/ecostraw-travel-kit/ [retrieved on 2020-05-08] * the whole document * ----- | 1-17 | |

TECHNICAL FIELDS
SEARCHED      (IPC)

C03C
A47G
A61J

The present search report has been drawn up for all claims

| Place of search | Date of completion of the search | Examiner |
|---|---|---|
| Munich | 11 May 2020 | King, Ruth |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 21 8524

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2020

| Patent document cited in search report | Publication date | Patent family member(s) | Publication date |
|---|---|---|---|
| DE 202018102778 U1 | 09-07-2018 | NONE | |

For more details about this annex : see Official Journal of the European Patent Office, No. 12/82

EPO FORM P0459